# EUROPEAN PATENT SPECIFICATION

(11) **EP 0 463 641 B1**
(45) Date of publication and mention of the grant of the patent: **02.05.1997**
(21) Application number: 91114922.7
(22) Date of filing: 11.02.1988
(51) Int. Cl.: G06F 1/04

(54) **A clock signal supply system**
Taktsignal-Versorgungssystem
Système de distribution de signaux d'horloge

(30) Priority: 20.03.1987 JP 63762/87; 08.06.1987 JP 141459/87; 08.06.1987 JP 141460/87
(43) Date of publication of application: 02.01.1992
(62) Divisional of application: 88101998.8
(73) Proprietor: HITACHI, LTD., Chiyoda-ku, Tokyo 101 (JP)
(72) Inventor: Masuda, Noboru, Kokubunji-shi (JP); Kamikawai, Ryotaro, Nishitama-gun, Tokyo (JP); Yagyu, Masayoshi, Kokubunji-shi (JP); Yamamoto, Masakazu, Hitachi Suzuki Shinden Shataku, Kodaira-shi (JP); Itoh, Hiroyuki, Kodaira-shi (JP); Saito, Tatsuya, Kokubunji-shi (JP)
(74) Representative: Beetz & Partner Patentanwälte

(56) References cited:
- EP-A- 0 012 186
- US-A- 4 165 490
- IBM TECHNICAL DISCLOSURE BULLETIN vol. 21, no. 3, August 1978, pp 995-997, New York, US; L.D. HOWE: "Automatic clock adjustment mechanism"
- IEEE JOURNAL OF SOLID-STATE CIRCUITS vol. SC-17, no. 1, February 1982, pp 51-56, New York, US; F. ANCEAU: "A synchronous approach for clocking VLSI systems"
- IBM TECHNICAL DISCLOSURE BULLETIN vol. 24, no. 2, July 1981, pp 895-897, New York, US; A. BLUM: "Automatic adjustment of several decentrally generated clock pulse sequences of a computer distributed over several VLSI chips"

## Description

The present invention relates to a clock signal supply system used in a computer system having a plurality of blocks which are destinations of supplied clock signals.

In "IEEE Journal of solid-state circuits", vol. SC-17, No. 1, Febr. 1982, pages 51-56, is disclosed a clock signal supply system in a main-frame computer having a plurality of blocks, each of said blocks being a clock signal destination, said system comprising: means for generating a clock signal, providing a clock signal supplied to all the blocks; dividing means operating in dependence of the clock signal so as to provide a reference signal being supplied to all of the blocks and having a lower frequency than the clock signal; in each of said blocks separated phase shifting means so as to provide a variable delay of an inputted clock signal to be shifted in accordance with an inputted shift control signal and in each of said blocks separated phase comparing means so as to provide said shift control signal in response to a phase relation of inputted signals.

In EP 0 282 735 A2, having the same filing date as the present application, a clock signal supply system is described wherein a reference signal is supplied to different blocks in a substantial equal transmission time by means of signal lines having the same length, said reference signal being used to adjust the signal delay time of a variable delay circuit so that an output signal from a frequency divider, which is connected to the output of the variable delay circuit, is in phase with said reference signal.

### SUMMARY OF THE INVENTION

It is an object of the present invention to provide a system for automating accurate phase adjustment of a plurality of clock signals each of which having a different phase from each other and wherein the number of points requiring accurate phase adjustment is reduced.

This object is achieved according to the invention by the features of claim 1.

### BRIEF DESCRIPTION OF THE DRAWINGS

Fig. 1 is a diagram showing a first embodiment of the invention.

Figs. 2 to 7 are diagrams showing component elements of the first embodiment.

Figs. 8 to 10 are diagrams showing configurations of further embodiments of the invention.

### DESCRIPTION OF THE PREFERRED EMBODIMENTS

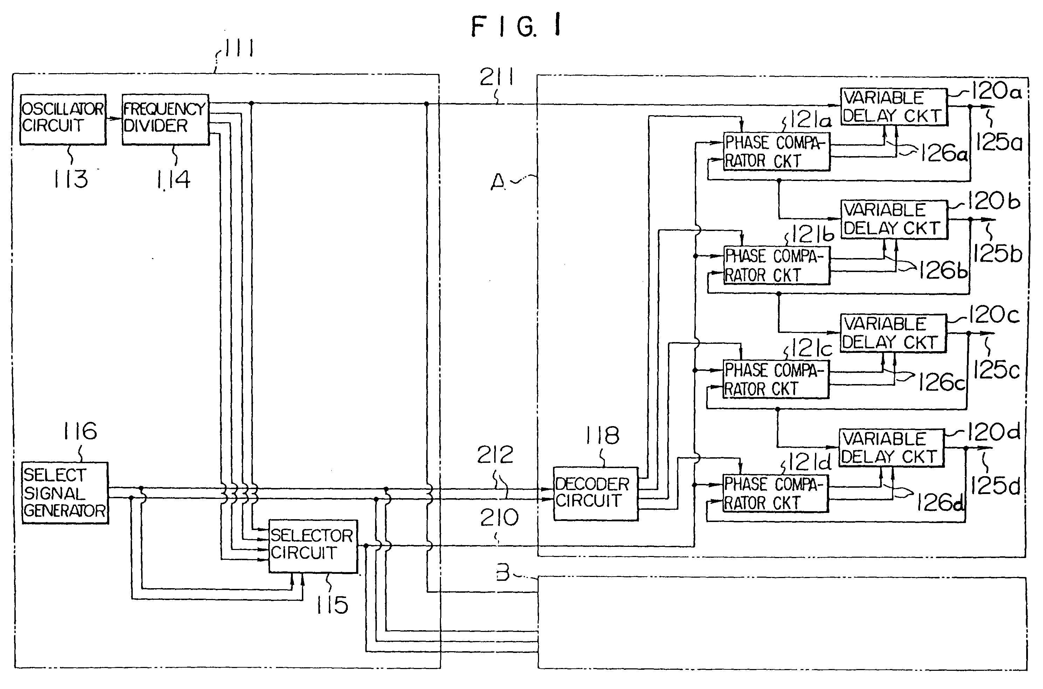

In Fig. 1, numeral 111 designates a clock source, and characters A, B destinations. Numeral 210 designates a line for passing a reference signal accurately phase adjusted, numeral 211 a line for passing a clock signal rough in phase accuracy, and numeral 212 a line for passing a select signal. At each destination, numerals 120 a-d designate a variable delay circuit, and numerals 121 a-d a phase comparator circuit. Numerals 125a to 125d designate clock signals automatically phase-adjusted according to the present invention, and numerals 126 a-d a control signal for controlling the variable delay circuit. Also, an oscillator circuit 113 in the clock source 111 is for generating an original clock signal high in frequency providing a base of clock signals of various phases. A frequency divider circuit 114 is for producing clock signals of various phases by frequency dividing the original clock signal. A select circuit 115 is for selecting one of the clock signals of various phases generated in the frequency divider circuit 114 and supplying it as a reference signal 210. A select signal generation circuit 116 is for generating a select signal 212 of a period sufficiently long as compared with the clock signal of various phases, which signal 212 is used to determine a clock signal of a given phase to be selected by the selector circuit 115.

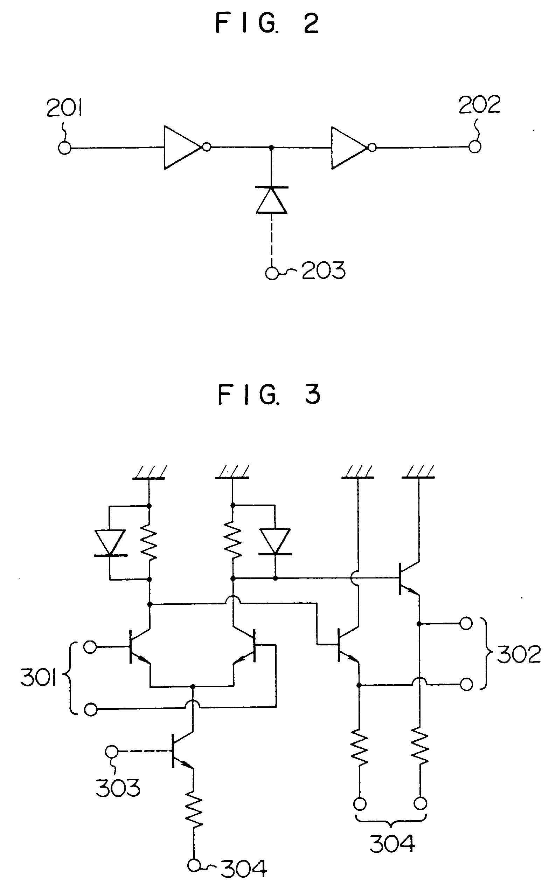

Now, the operation of the circuit shown in Fig. 1 will be explained. In each of the destinations A and B, phases are adjusted by passing a clock signal rough in phase accuracy through the variable delay circuits 120 a-d. An output of the variable delay circuits 120 a-d is compared with a receiving reference signal 210 supplied in the desired phase, and the result of comparison is fed back to the corresponding variable delay circuit 120 a-d for accurate phase adjustment. While another phase of clock signal is being sent as a reference signal 210, on the other hand, the control signal 126 a-d from the phase comparator circuit 121 a-d is blocked in response to a signal from a decoder circuit 118 thereby to prevent the delay time of the variable delay circuits 120 a-d from undergoing a change. In this embodiment configured as explained above, phase adjustment is required only for the reference signal 210 and the adjustment of each phase of clock signals which has been required in the prior art is eliminated. Incidentally, a specific configuration of the variable delay circuit 120 a-d and the phase comparator circuit 121 a-d shown in Fig 1 is disclosed in Figs. 2 to 6.

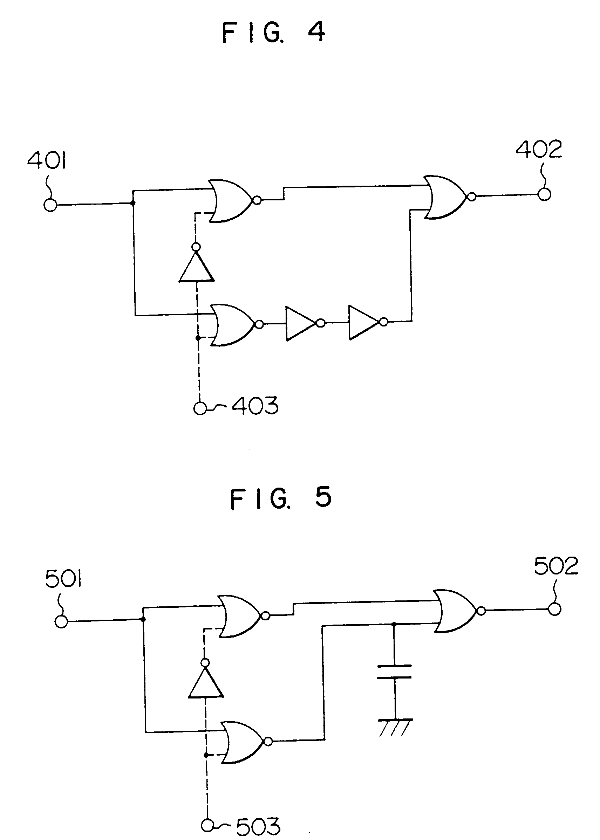

Figs. 2 to 5 show some examples of the variable delay circuits 120 a-d in Fig. 1. In the circuit of Fig. 2, the delay time is controlled by changing the load capacity connected to the output of the left gate circuit (left inverter) according to the control voltage applied to a control terminal 203 by taking advantage of the fact that the coupling capacity of a diode changes with the applied voltage. Fig. 3, on the other hand, shows a circuit in which a current flowing in a differential circuit is controlled by changing the control voltage 303 and the current for charging a coupling capacitance of a clamping diode is adjusted thereby to control and produce at 302 the delay time of an input signal. The terminal 304 is connected to a power supply. This circuit is used with a differential signal applied to the input terminals 301 or an intermediate-level voltage applied to one of the input terminals 301. This circuit is capable of controlling the delay time at the time of fall but not virtually that at the time of rise. If the output is not used in differential way, therefore, the pulse duration changes. In order to avoid this inconvenience, the circuit of Fig. 2 may be used in double stages. The circuits shown in Figs. 4 and 5 are variable delay circuits of digital control type in which the delay time depends on whether the signal is passed through the upper or lower line. These circuits cannot be continuously controlled unlike the analog control type of circuits shown in Figs. 2 and 3, but are easily used to increase the variable amount of delay time. Especially, the circuit of Fig. 4 has the advantage that the pulse form remains unchanged substantially with the increase in the change of the delay time. If a variable delay circuit used with the present invention is to be configured only of a circuit of digital control type, it is necessary to connect several circuits of different changes in delay time in multiple stages. It is also possible to use a circuit of digital control type and one of analog control type in combination.

In the case where a variable delay circuit of digital control type is used as shown in Figs. 4 and 5, what is called the "hazard" is liable to occur in switching the delay time. This can be prevented by a method in which the timing of switching the delay time is synchronized with the input signal of this circuit so that the output signal remains unchanged even after switching. Another preventive method is by turning off the operation of the control system to prevent the delay time from changing after phase adjustment is complete. These two methods may of course be used in combination.

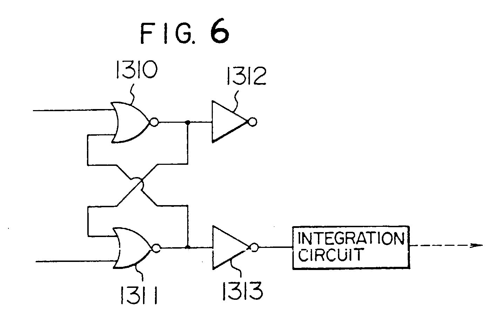

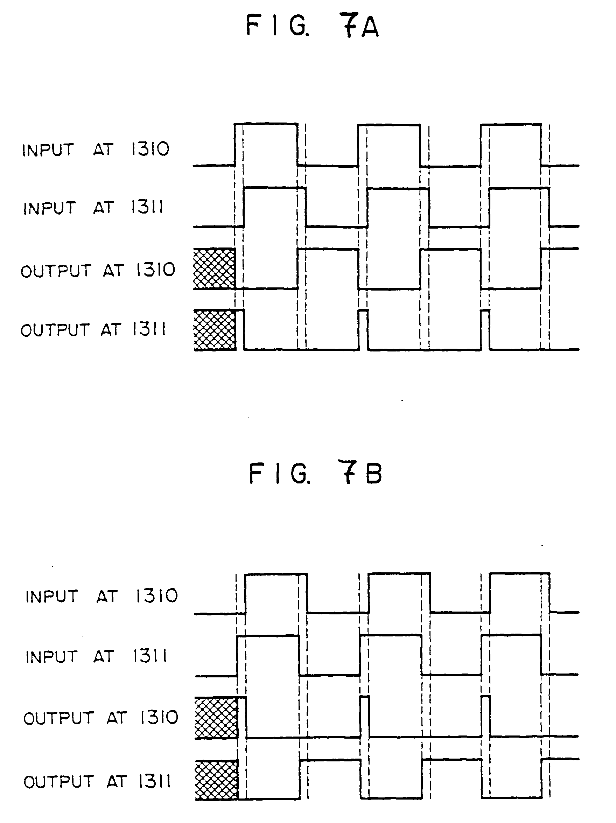

Fig. 6 is a diagram showing an example of a phase comparator circuit. If a circuit of such a type that the delay time thereof decreases with the increase in control voltage is used as the variable delay circuit 120 a-d in Fig. 1, for instance, the received reference signal transmitted via the third signal line 210 in Fig. 1 is applied to the gate circuit 1310 of Fig. 6 and the received clock signal to the gate circuit 1311. Also, the time constant of the integration circuit is set sufficiently long as compared with the period of the signal applied to the gate circuit 1310 or 1311. The relationship between the input and output of the gate circuits 1310 and 1311 is shown in Figs. 7A and 7B. The output waveforms in Figs. 7A and 7B ignore the delay time in the gate circuits 1310 and 1311. In the case where the phase of the signal applied to the gate circuit 1311 is retarded from that of the signal applied to the gate circuit 1310, the average output of the gate circuit 1311 assumes a value near to the low level as shown in Fig. 7A. This output is applied through a buffer inverter circuit 1313 to an integration circuit, so that the average output of the inverter circuit 1313 takes a value proximite to the high level, with the result that the output voltage of the integration circuit steadily increases thereby shortening the delay time of the variable delay circuit 120 a-d. The phase of the signal applied to the gate circuit 1311 is thus advanced. In the case where the phase of the signal applied to the gate circuit 1311 is advanced of that of the signal applied to the gate circuit 1310, by contrast, the average output of the gate circuit 311 assumes a value near to the average of the low and high levels as shown in Fig. 7B, and the output voltage of the integration circuit steadily decreases, thereby retarding the phase of the signal applied to the gate circuit 1311. As a result, the signals applied to the gate circuit 1310 and the gate circuit 1311 are almost in phase with each other under steady condition. Incidentally, the gate circuit 1312 is a dummy gate circuit for matching the load conditions of the gate circuits 1310 and 1311. Also, if the gate circuits 1310 to 1313 are arranged in close proximity to each other within a single integrated circuit, the delay time difference between the gate circuits 1310 and 1311 is reduced, thereby improving the accuracy of phase adjustment.

Also, if the effect of a dynamic skew caused by a power noise or the like is to be avoided, it is desirable that the non-adjusted clock signal 211 and the reference signal 210 be sent in the form of a differential signal. Further, once phase adjustment is complete, the control process should be suspended to prevent the delay time of the variable delay circuit 120 a-d from switching to avoid the effect of a hazard. A specific configuration of the selector 115 and the decoder circuit 118 is well known.

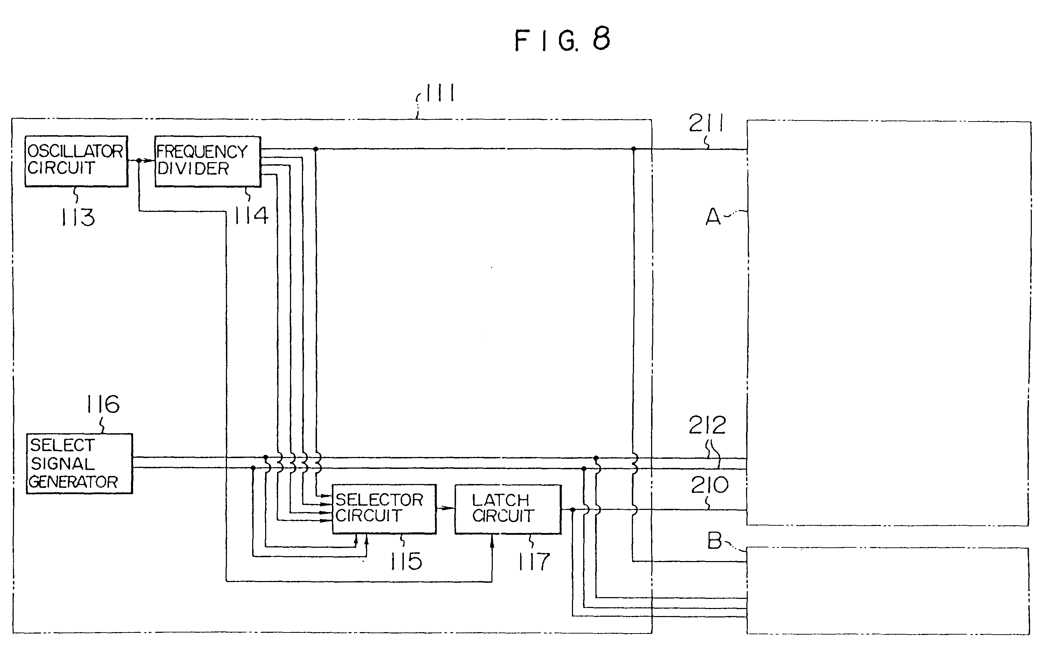

Fig. 8 shows a modification of the embodiment shown in Fig. 1. In this modification, a latch circuit 117 is inserted in the part for sending out the reference signal 210 in the clock source 111 so as to send the reference signal 210 in synchronism with the original clock. This arrangement assures equal intervals of differences of the phases sent out as a reference signal, even if the load of the frequency divider circuit 114 is not uniform for each phase of the clock signals.

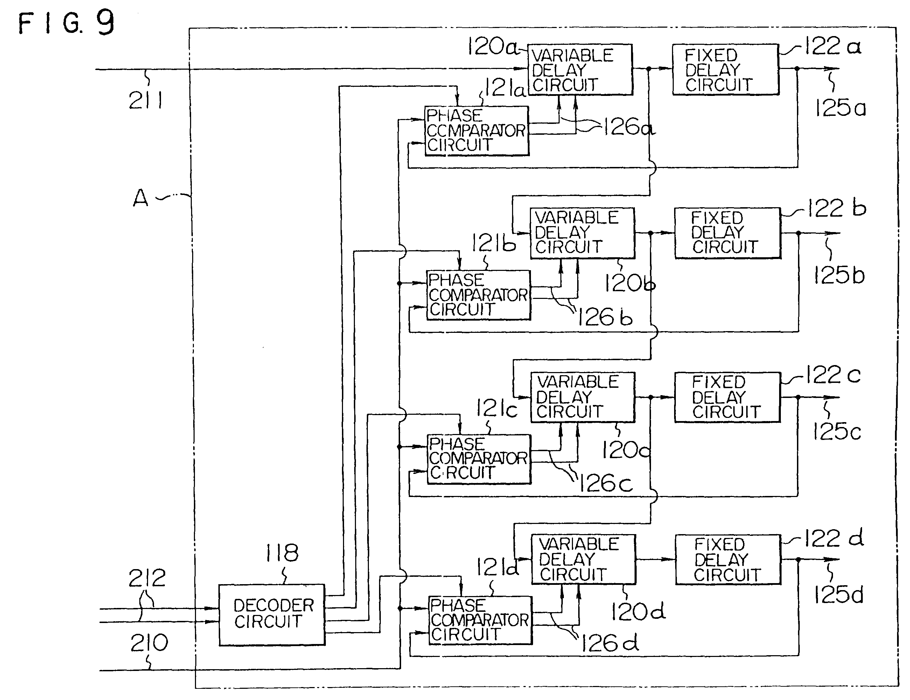

Fig. 9 shows another embodiment of the phase adjusting circuit in the destination A or B included in the embodiment of Fig. 1 and includes a fixed delay circuit 122 a-d in the stage next to the variable delay circuit 120 a-d. If a minimized delay time of the variable delay circuit 120 a-d exceeds the phase differences between clock signals, a configuration of Fig. 9 in which the delay time of the fixed delay circuit 122 a-d is progressively reduced downward in the diagram, is recommended. The fixed delay circuit 122 a-d is realized by connecting several stages of gate circuits in series. In Fig. 9, the inputs of the variable delay circuit 120 a-d may be connected directly to the non-adjusted clock signal 211.

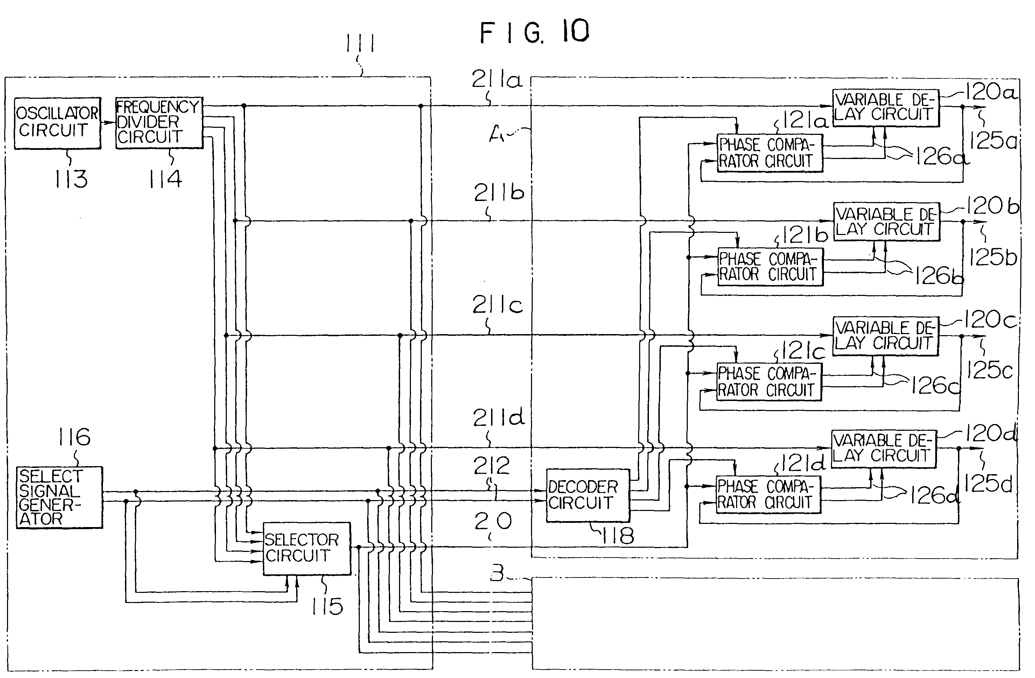

Fig. 10 shows another embodiment of the system shown in Fig. 1 for supplying a clock signal 211 rough in phase accuracy separately for each phase from a clock source 111. In the case of Fig. 10, there are an increased number of signal lines required between the clock source 111 and each of the destinations A and B, but only the reference signal line 210 requires accurate phase adjustment. The configuration such as shown in Fig. 10 is effective when it is desired to render the period of a clock signal variable over a wide range or when a variable delay circuit with a wide variable range is not usable. As an example of the latter, it may be desired to apply the present invention by dividing the parts from the clock source to the end destinations into two or more stages, or specifically, while applying the present invention to the parts from the clock source 111 to a relay circuit on each wiring board, it may be desired further to apply the present invention to the parts between the relay circuit and each LSI mounted on the wiring board.

## Claims

1. A clock supply system used in a computer system having a plurality of blocks (A, B) which are destinations of a supplied clock signal, comprising:
means (113, 114) for generating a plurality of clock signals having phases different from each other;
a first signal line (211) for transmitting one of said clock signals from said clock generating means (113, 114) to said blocks (A, B);
each block comprising:
means (120 a - d, 121 a - d) for adjusting the phase of a received clock signal by passing said received clock signal through a variable delay circuit (120 a - d) and comparing (121 a - d) the output signal of said variable delay circuit (120 a - d) with a reference signal (210) for deriving a control signal (126 a - d) which adjusts the delay time of said variable delay circuit (120 a - d) so that its output signal is in phase with said reference signal; said clock supply system being **characterized** by
means (116) for generating a select signal by which one of said clock signals generated by said means (113, 114) for generating is designated successively;
a second signal line (212) for transmitting said select signal from said select signal generating means (116) to said blocks (A, B);
means (115) for generating a reference signal on the basis of said clock signals generated by said means (113, 114) for generating, said reference signal being a phase reference of the clock signal designated by said select signal;
a third signal line (210) for transmitting said reference signal from said reference generating means (115) to said blocks (A, B);
and in that each block comprises
a plurality of variable delay circuits (120 a - d) connected in series and a plurality of comparator circuits (121 a - d), wherein a first one of said series-connected delay circuits (120 a) is connected at its input terminal with said first signal line (211), and wherein each of said variable delay circuit (120 a - d) a corresponding comparator circuit (121 a - d) is provided, each of said comparator circuits (121 a - d) receiving an output signal from the corresponding variable delay circuit (120 a - d), said reference signal from said third signal line (210) and an output signal of a decoder circuit (118), which is controlled by said select signal generating means (116), for successively designating one of said variable delay circuits (120 a - d) for outputting one of a plurality of clock signals (125 a - d) having a different phase from each other and wherein the phase of this outputted clock signal (125 a - d) coincides with said reference signal on said third signal line (210).

2. A clock signal supply system according to claim 1, wherein said clock signal generating means (113, 114) includes an oscillator (113) generating an original clock signal and a frequency divider (114) dividing the frequency of said original clock signal.

3. A clock signal supply system according to claim 1, further comprising a latch circuit (117) for latching said reference signal from said reference signal generating means (115) in synchronism with said original clock signal and for sending out said latched reference signal to said third signal line (210).

4. A clock signal supply system according to any one of claims 1 to 3, wherein the frequency of said reference signal on said third signal line (210) is lower than that of said clock signal on said first signal line (211).

5. A clock supply system according to claim 1, wherein each one of said plurality of variable delay circuits (120 a - d) is connected at its input terminal with one of a plurality of output lines (211 a - d) of said clock signal generating means (113, 114).

## Patentansprüche

1. Taktausgabesystem in einem Rechnersystem mit mehreren Blöcken (A, B), die Adressaten des ausgegebenen Taktsignals sind, umfassend:
Vorrichtungen (113, 114) zum Erzeugen mehrerer Taktsignale mit unterschiedlichen Phasen;
eine erste Signalleitung (211) für die Übertragung eines der Taktsignale von der Taktsignalerzeugungsvorrichtung (113, 114) zu den Blöcken (A, B);
wobei jeder Block umfaßt:
Vorrichtungen (120a bis d, 121a bis d) zum Anpassen der Phase eines empfangenen Taktsignals, indem das empfangene Taktsignal durch einen Verzögerungseinstellschaltkreis (120a bis d) geschleift wird und das Ausgangssignal vom Verzögerungseinstellschaltkreis (120a bis d) verglichen wird (121a bis d) mit einem Referenzsignal (210) und ein entsprechendes Steuersignal (126a bis d) ausgegeben wird, das die Verzögerungszeit des Verzögerungseinstellschaltkreises so einstellt, daß das Ausgangssignal in Phase mit dem Referenzsignal ist; wobei das Taktausgabesystem gekennzeichnet ist durch:
eine Vorrichtung (116) zum Erzeugen eines Auswahlsignals, durch welches eines der Taktsignale, das durch die Erzeugungsvorrichtungen (113, 114) erzeugt wurde, nachfolgend bestimmt wird;
eine zweite Signalleitung (212) für die Übertragung des Auswahlsignals von der Auswahlsignalerzeugungsvorrichtung (116) zu den Blöcken (A, B);
eine Vorrichtung (115) zum Erzeugen eines Referenzsignals in Abhängigkeit von den Taktsignalen, die durch die Erzeugungsvorrichtungen (113, 114) erzeugt wurden, wobei das Referenzsignal eine Phasenreferenz des Taktsignals ist, das durch das Auswahlsignal bestimmt wurde;
eine dritte Signalleitung (210) für die Übertragung des Referenzsignals von der Referenzerzeugungsvorrichtung (115) an die Blöcke (A, B);
und dadurch, daß jeder Block umfaßt:
mehrere Verzögerungseinstellschaltkreise (120a bis d), die in Reihe geschaltet sind, und mehrere Vergleicherschaltkreise (121a bis d), wobei ein erster der in Reihe geschalteten Verzögerungsschaltkreise (120a) über seinen Eingangsanschluß mit der ersten Signalleitung (211) verbunden ist, und wobei für jeden der Verzögerungseinstellschaltkreise (120a bis d) ein entsprechender Vergleicherschaltkreis (121a bis d) vorgesehen ist, wobei jeder der Vergleicherschaltkreise (121a bis d) ein Ausgangssignal von dem jeweiligen Verzögerungseinstellschaltkreis (120a bis d), das Referenzsignal auf der dritten Signalleitung (210) und ein Ausgangssignal eines Decoderschaltkreises (118) empfängt, welcher durch die Auswahlsignalerzeugungsvorrichtung (116) gesteuert wird, um nacheinander einen der Verzögerungseinstellschaltkreise (120a bis d) zu bestimmen, so daß eines der mehreren Taktsignale (125a bis d) mit unterschiedlicher Phase ausgegeben wird, und wobei die Phase des ausgegebenen Taktsignals (125a bis d) zusammenfällt mit dem Referenzsignal auf der dritten Signalleitung (210).

2. Taktsignalausgabesystem nach Anspruch 1, bei dem die Taktsignalerzeugungsvorrichtung (113, 114) einen Oszillator (113) für die Erzeugung eines Originaltaktsignals und einen Frequenzteiler (114) zum Teilen der Frequenz des Originaltaktsignals umfaßt.

3. Taktsignalausgabesystem nach Anspruch 1, das außerdem einen Verriegelungsschaltkreis (117) zum Verriegeln des Referenzsignals von der Referenzsignalerzeugungsvorrichtung (115) synchron zum Originaltaktsignal und zum Aussenden des verriegelten Referenzsignals über die dritte Signalleitung (210) umfaßt.

4. Taktsignalausgabesystem nach einem der Ansprüche 1 bis 3, bei dem die Frequenz des Referenzsignals auf der dritten Signalleitung (210) niedriger als die des Taktsignals auf der ersten Signalleitung (211) ist.

5. Taktsignalausgabesystem nach Anspruch 1, bei dem jeder einzelne der mehreren Schaltkreise veränderbarer Verzögerung (120a bis d) an seinem Eingangsanschluß mit einer der mehreren Ausgangsleitungen (211a bis d) der besagten Taktsignalerzeugungsvorrichtungen (113, 114) verbunden ist.

## Revendications

1. Système de distribution de signaux d'horloge utilisé dans un système informatique comportant une pluralité de blocs (A, B) qui constituent les destinations d'un signal d'horloge distribué, comportant :
des moyens (113, 114) pour produire une pluralité de signaux d'horloge ayant des phases mutuellement différentes,
une première ligne de signal (211) destinée à transmettre l'un desdits signaux d'horloge depuis lesdits moyens de production de signaux d'horloge (113, 114) vers lesdits blocs (A, B),
chaque bloc comportant :
des moyens (120a à 120d, 121a à 121d) pour ajuster la phase d'un signal d'horloge reçu en faisant passer ledit signal d'horloge reçu à travers un circuit à retard variable (120a à 120d) et en comparant (121a à 121d) le signal de sortie dudit circuit à retard variable (120a à 120d) à un signal de référence (210) pour obtenir un signal de commande (126a à 126d) qui ajuste le temps de retard dudit circuit à retard variable (120a à 120d) de sorte que son signal de sortie soit en phase avec ledit signal de référence, ledit système de distribution de signaux d'horloge étant caractérisé en ce qu'il comporte
des moyens (116) pour produire un signal de sélection par l'intermédiaire duquel l'un desdits signaux d'horloge produit par lesdits moyens de production (113, 114) est successivement désigné,
une deuxième ligne de signal (212) pour transmettre ledit signal de sélection depuis lesdits moyens de production de signal de sélection (116) vers lesdits blocs (A, B),
des moyens (115) pour produire un signal de référence sur la base desdits signaux d'horloge produits par lesdits moyens de production (113, 114), ledit signal de référence étant une référence de phase du signal d'horloge désigné par ledit signal de sélection,
une troisième ligne de signal (210) pour transmettre ledit signal de référence depuis lesdits moyens de production de signal de référence (115) vers lesdits blocs (A, B),
et en ce que chaque bloc comporte
une pluralité de circuits à retard variable (120a à 120d) montés en série et une pluralité de circuits comparateurs (121a à 121d), un premier desdits circuits à retard (120a) montés en série étant relié au niveau de sa borne d'entrée à ladite première ligne de signal (211), et, pour chacun desdits circuits à retard variable (120a à 120d), un comparateur (121a à 121d) correspondant étant agencé, chacun desdits circuits comparateurs (121a à 121d) recevant un signal de sortie en provenance du circuit à retard variable (120a à 120d) correspondant, ledit signal de référence provenant de ladite troisième ligne de signal (210) et un signal de sortie d'un décodeur (118), qui est commandé par lesdits moyens de production de signal de sélection (116), pour désigner successivement l'un desdits circuits à retard variable (120a à 120d) afin qu'il délivre en sortie l'un parmi une pluralité de signaux d'horloge (125a à 125d) ayant des phases mutuellement différentes, et la phase de ce signal d'horloge (125a à 125d), délivré en sortie, coïncidant avec ledit signal de référence émis sur ladite troisième ligne de signal (210).

2. Système de distribution de signaux d'horloge selon la revendication 1, dans lequel lesdits moyens de production de signaux d'horloge (113, 114) comportent un oscillateur (113) produisant un signal d'horloge original et un diviseur de fréquence (114) divisant la fréquence dudit signal d'horloge original.

3. Système de distribution de signaux d'horloge selon la revendication 1, comportant en outre un verrou (117) destiné à verrouiller ledit signal de référence provenant desdits moyens de production de signal de référence (115) en synchronisation avec ledit signal d'horloge original et destiné à envoyer ledit signal de référence verrouillé vers ladite troisième ligne de signal (210).

4. Système de distribution de signaux d'horloge selon l'une quelconque des revendications 1 à 3, dans lequel la fréquence dudit signal de référence émis sur ladite troisième ligne de signal (210) est inférieure à celle dudit signal d'horloge émis sur ladite première ligne de signal (211).

5. Système de distribution de signaux d'horloge selon la revendication 1, dans lequel chaque circuit de ladite pluralité de circuits à retard variable (120a à 120d) est relié au niveau de sa borne d'entrée à l'une parmi une pluralité de lignes de sortie (221a à 211d) desdits moyens de production de signaux d'horloge (113, 114).
